# EUROPÄISCHE PATENTSCHRIFT

(11) **EP 0 616 989 B1**
(45) Veröffentlichungstag und Bekanntmachung des Hinweises auf die Patenterteilung: **15.07.1998**
(21) Anmeldenummer: 94103878.8
(22) Anmeldetag: 14.03.1994
(51) Int. Cl.: C04B 41/49, C08J 3/03, C09D 183/04

(54) **Imprägnierungsemulsion für mineralische Baustoffe**
Impregnating emulsion for mineral building material
Emulsion d'impregnation pour matériaux de construction minéraux

(30) Priorität: 26.03.1993 DE 4309971
(43) Veröffentlichungstag der Anmeldung: 28.09.1994
(73) Patentinhaber: BAYER AG, 51368 Leverkusen (DE)
(72) Erfinder: de Montigny, Armand, Dr., D-51373 Leverkusen (DE); Kober, Hermann, D-51467 Bergisch Gladbach (DE); Klinksiek, Bernd, Dipl.-Ing., D-51429 Bergisch Gladbach (DE); Schlak, Ottfried, Dr., D-51061 Köln (DE)

(56) Entgegenhaltungen:
- EP-A- 0 107 559
- EP-A- 0 200 009
- EP-A- 0 285 725
- EP-A- 0 392 253
- EP-A- 0 436 431
- US-A- 4 778 624

## Beschreibung

Die vorliegende Erfindung betrifft eine wäßrige, von organischem Lösungsmittel freie Imprägnierungsemulsion, die sowohl tief in dichte wie auch in poröse Baustoffe eindringt und ihnen gute wasserabweisende Eigenschaften verleiht, und auch im Falle neutraler Substrate ohne Katalysator wirksam ist.

Sie basiert auf Gemischen geeigneter hydrolysierbarer und kondensierbarer alkoxyfunktioneller Siliconharze sowie Alkylalkoxysilanen.

Eine Reihe von wäßrigen Zubereitungen, die für wasserabweisende Imprägnierungen poröser Baustoffe entwickelt worden sind, sind bekannt. Ihnen haften jedoch eine Reihe, im Folgenden näher erläuterte Mängel an:
Sind die Baustoffe besonders dicht, so versagen, hinsichtlich Eindringtiefe, im allgemeinen alle auf Harzkörpern basierenden Zubereitungen, selbst wenn jene relativ niedermolekular sind. Ein Beispiel hierfür sind die in EP-A-157 323 bekanntgemachten Zubereitungen. Porösen Baustoffen verleihen sie, bei ausreichender Eindringtiefe, eine exzellente Oberflächenhydrophobie. Dichte Baustoffe werden hingegen zwar oberflächlich hydrophobiert, wobei die Eindringtiefe jedoch mangelhaft ist. Dies hat bei derartigen Baustoffen nur einen zeitlich begrenzten Schutz gegen schädliche Wassereinwirkung zur Folge.

Werden gute Eindringtiefen bei dichten Baustoffen verlangt, kommen bevorzugt wäßrige Emulsionen von Alkylalkoxysilanen zur Anwendung. Solche Zubereitungen sind z.B. in DE-A-27 51 714, EP-A-234 024 und EP-A-340 816 bekannt gemacht worden.

Diese Zubereitungen weisen zwar prinzipiell ein einwandfreies Eindringvermögen auf, führen jedoch in der Praxis zu mangelhafter Oberflächenhydrophobie, die sich durch eine starke Benetzung bei Beregnungen manifestiert. Darüber hinaus wird auch oftmals die gewünschte Eindringtiefe nicht erreicht. Die Gründe dafür sind folgende: Die etwas problematische Stabilität der Alkylalkoxysilane in Emulsion führt zur Bildung von Kondensationsprodukten, die einerseits - aufgrund ihres Kondensationsgrades - schon nicht mehr in der Lage sind ausreichend tief einzudringen, andererseits aber auch (noch) nicht in der Lage sind hohe Oberflächenhydrophobie zu gewährleisten. Werden den Emulsionen - zur Verhinderung vorzeitiger Hydrolyse und zur Gewährleistung einer ausreichenden Lagerstabilität - hohe Mengen an Puffersubstanzen zugesetzt, so hat dies auch Auswirkungen für die gewünschte Hydrolyse im Anschluß an die Applikation, da sowohl Hydrolyse wie auch Kondensation - vor allem in neutralen Baustoffen - stark gehemmt werden. Besonders bei sommerlichen Temperaturen führt dies zu einem Verdunsten der Silane, bevor eine Hydrolyse und Kondensation eintreten kann. Diesem Mangel versucht man im Anwendungsfall durch Einsatz hochkonzentrierter Emulsion entgegenzusteuern, was zu einer Verschwendung der im allgemeinen hochwertigen Silane führt.

Gemäß DE-A-33 12 911 soll der Nachteil der harzhaltigen Systeme dadurch überwunden werden, daß ein Gemisch von Organoalkoxysiloxanen mit unterschiedlichem Kondensationsgrad eingesetzt wird. Allerdings basieren diese Mittel noch auf Lösungen in organischen Lösungsmitteln.

In DE 3 911 479 ist eine Emulsion aus einem Silikonharz u/o einem Alkylalkoxysilan bekannt, die durch einen Spalthomogenisator geschickt würde. Züdem ist eine gleichartige Zubereitung offenbart worden, in dem ein Silicon-Harz neben einem Alkylalkoxysilan und einem Feststoff mit definierten Oberflächeneigenschaften vorliegt. Hier tritt ein Teil der oben beschriebenen Nachteile nicht auf. Problematisch ist jedoch hier die Tatsache, daß es sich um eine Emulsion mit zusätzlich festen Teilchen handelt, was für die Stabilität der Emulsion nicht von Vorteil ist. Mangelnde physikalische Stabilität führt zu einer schleichenden Hydrolyse und Vorkondensation mit den oben geschilderten Mängel. Handelt es sich - wie bei den geoffenbarten Beispielen - um relativ wenig dichte Baustoffe, so sind gravierende Mängel nicht ohne weiteres feststellbar.

Sollen neutrale Baustoffe möglichst frühzeitig gegen Feuchtigkeitseinwirkung geschützt werden, wird ein Zusatz von Zinnkatalysatoren empfohlen, um eine verbesserte Wirksamkeit zu erzielen (Beispiel 4). Ein Katalysatorzusatz ist, wie dem Fachmann bekannt, insofern kritisch, als er die Topfzeit der anwendungsbereiten Emulsion stark beeinflußt, was wiederum zu den oben beschriebenen Mängeln führt. Darüber hinaus erfolgt der Zusatz eines Katalysators in der Praxis (z.B. auf Baustellen) unter erschwerten Bedingungen, was eine höhere Fehlerrate zur Folge hat. Hier ist anzumerken, daß Fehler bei der Imprägnierung unbedingt zu vermeiden sind, da sie in den allermeisten Fällen nicht sofort erkennbar sind und dadurch möglicherweise zu nicht unerheblichen Folgeschäden führen können.

Keine der genannten Veröffentlichungen hat sich mit den physikalischen Eigenschaften von wäßrigen Emulsionen, die als Hydrophobiermittel Einsatz finden, befaßt.

Im Rahmen der der vorliegenden Erfindung zugrundeliegenden Untersuchungen wurde nun gefunden, daß die bekannten Hydrophobiermittel für mineralische Stoffe auf Basis wäßriger Emulsionen von Silanen und/oder Siloxanharzen, die jeweils reaktive Gruppen enthalten, erheblich verbessert werden können, wenn die Abmessungen der emulgierten Teilchen und/oder Tröpfchen in einem bestimmten, eng bemessenen Größenbereich liegen und eine enge Teilchengrößenverteilung aufweisen. Die gefundene Eigenschaftsverbesserung bezieht sich auf das gesamte Spektrum der für solche Hydrophobiermittel wichtigen Eigenschaften.

Dieses Eigenschaftsspektrum umfaßt die Stabilität der Emulsionen sowohl in konzentrierter Form als auch nach Verdünnung auf die Applikationskonzentration, sowie die Hydrophobierungswirkung und zwar sowohl in Bezug auf die Eindringtiefe der Emulsion vor Hydrolyse und/oder Kondensation, die Frühwasserbeständigkeit und die Wasseraufnahmebeständigkeit der imprägnierten mineralischen Baustoffe.

Die bekannten Hydrophobiermittel stellen jeweils Kompromisse dar, die im Hinblick auf einen bestimmten Einsatzzweck (Anwendung auf alkalischen oder neutralen mineralischen Baustoffen, in stärker oder schwächer porösen Baustoffen, in feuchtem oder trockenem bzw. die Verdunstung förderndem sonnenreichen oder weniger die Verdunstung begünstigenden kühlen und wolkenreichen Klimagebieten) optimiert, wobei Nachteile bei Eigenschaften, die bei dem bestimmten Einsatzzweck weniger gravierend sind, in Kauf genommen werden. Werden solche Hydrophobiermittel mit der erfindungsgemäßen Teilchengröße und -verteilung ausgestattet, werden gelegentlich in Kauf genommene Nachteile reduziert, so daß sich der Einsatzbereich verbreitert. Die Verbreiterung des Einsatzbereiches kann z.B. darin bestehen, daß die Mitverwendung eines Katalysators überflüssig wird, so daß die Lagerstabilität erhöht wird, oder die Anwendung von Emulgiermitteln und Emulsionsstabilisatoren reduziert werden können, so daß die Frühregenbeständigkeit der Imprägnierung verbessert wird. Andere Hydrophobiermittel, die für hochporöse mineralische Baustoffe bereits optimale Eigenschaften aufweisen, werden mit erfindungsgemäßer Teilchengröße und Teilchengrößenverteilung auch für feinporöse Baustoffe einsetzbar.

Neben der an sich nicht überraschenden Tatsache, daß feinteilige Emulsionen mit engem Größenverteilungsspektrum im allgemeinen eine größere Stabilität gegen Koagulation und Segregation aufweisen, wird offenbar auch das Diffusionsverhalten im Baustoff sowie das Hydrolyseverhalten der Silane und/oder das Kondensationsverhalten der Siloxanharze positiv beeinflußt.

In einer bevorzugten Ausführungsform betrifft die vorliegende Erfindung schließlich eine Emulsion spezieller reaktiver Silane und Siloxanharze, die als universelles Hydrophobierungsmittel für sowohl neutrale als auch alkalische, sowohl feinporöse als auch hochporöse mineralische Baustoffe geeignet sind und hohe Lagerstabilität aufweisen, sowie geringe Verdunstungsneigung nach Applikation aufweisen.

Gegenstand der vorliegenden Erfindung sind nun Hydrophobiermittel für mineralische Baustoffe auf Basis wäßriger Emulsionen von reaktive Gruppen enthaltenden Organosilanen und/oder Organosiloxanharzen, die dadurch gekennzeichnet sind, daß die disperse Phase mittlere Teilchen- bzw. Tröpfchendurchmesser von 0,30 bis 1,1 µm und eine Breite der Teilchen- bzw. Tröpfchengrößenverteilung von unter 1,3, vorzugsweise unter 1,1, aufweist.

Unter dem mittleren Teilchendurchmesser wird das Volumenmittel verstanden, d.h. der berechnete Durchmesser eines Teilchens, das sich aus dem Gesamtvolumen aller Teilchen der Emulsion, dividiert durch die Anzahl der Teilchen, ergibt.

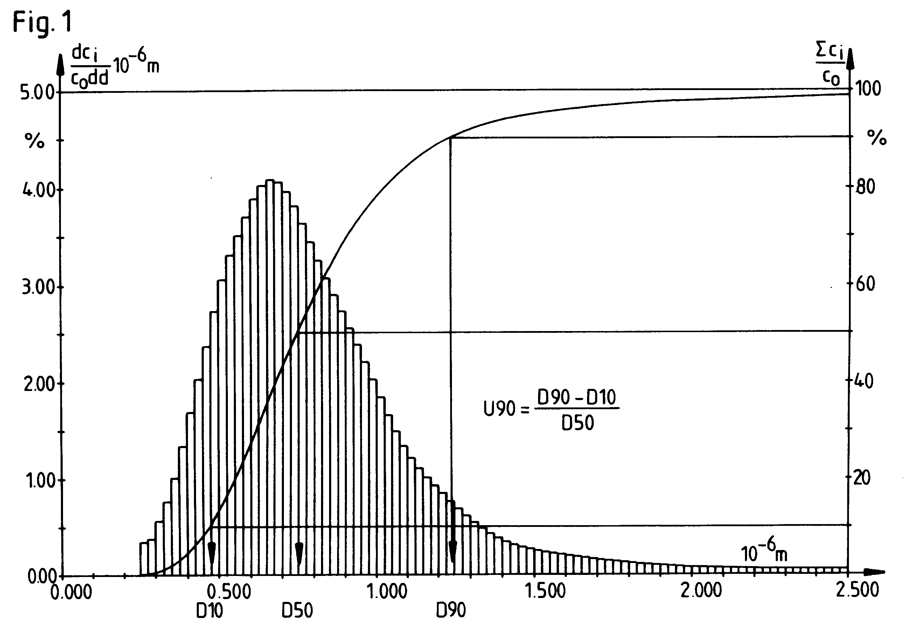

Der Zahlenwert der Breite der Teilchengrößenverteilung errechnet sich so, daß von der gegebenen Teilchenmenge die Teilchen mit den kleinsten Durchmessern bis zu einer Menge von 10 Gew.-% der Teilchenmenge (D10) und die Teilchen mit den größten Durchmessern bis zu einer Menge von 10 Gew.-% der Teilchenmenge (D90) unberücksichtigt bleiben und die Differenz der Durchmesser des verbleibenden größten Teilchens und des verbleibenden Kleinsten Teilchens dividiert wird durch den Durchmesser desjenigen Teilchens (D50) das größer ist als 50 Gew.-% aller Teilchen und Kleiner ist als 50 Gew.-% aller Teilchen. Dieser Zahlenwert wird im Folgenden U90 genannt (s. Fig. 1).

Die Herstellung der engen Teilchengrößenverteilung erfolgt vorzugsweise in Emulgierapparaten, bei denen eine Voremulsion, an die keine besonderen Anforderungen zu stellen sind, unter hohem Druck durch eine Düse mit geringer Abmessung in zumindest einer Dimension gedrückt wird. Als Düsen kommen Spaltdüsen, Ringschlitzdüsen oder Lochdüsen in Frage. Die geringe Abmessung (Spaltbreite, Ringschlitzbreite, Lochdurchmesser) kann ca. 0,2 bis 1 mm betragen. Die Abmessung der Düse in Strömungsrichtung kann das 1,5- bis 2-fache der Abmessung geringer Dimension betragen. Der anzuwendende Druck kann typischerweise 3 bis 15 MPa (30 bis 150 Atmosphären) betragen. Apparate dieser Art sind als Strahldispergatoren bzw. Hochdruck-Homogenisator bekannt. Besonders bevorzugt wird ein Strahldispergator gemäß EP-A-101 007 eingesetzt.

Zur Einstellung der erfindungsgemäßen Teilchengrößenverteilung ist es erforderlich, die Emulsion mehrfach durch die Düse zu drücken oder Apparate einzusetzen, die mehrere Düsen hintereinander aufweisen, wobei ein entsprechend der Anzahl der Düsen erhöhter Druck anzuwenden ist.

Es wurde gefunden, daß im Strahldispergator ein 2- bis 6-facher Düsendurchgang ausreichend ist. Im Hochdruck-Homogenisator, der eine Ringschlitzdüse aufweist, sind 5 bis 10 Düsendurchgänge erforderlich. Vorzugsweise werden mehrere Düsen unter entsprechender Anpassung des Gesamtdruckes hintereinandergeschaltet.

Die erfindungsgemäßen Dispersionen weisen Wassergehalte zwischen 30 und 95 Gew.-% auf, wobei zur Dispergierung im allgemeinen eine Vordispersion mit einem Wassergehalt von 30 bis 50 Gew.-% eingesetzt wird. Die Verdünnung auf Applikationskonzentration mit einem Wassergehalt von 80 bis 95 Gew.-% erfolgt im allgemeinen erst vor der Applikation durch Anwender.

Bevorzugte erfindungsgemäße Emulsionen werden aus Zubereitungen erhalten, die 5 bis 70 Gew.-% eines Gemisches enthält, in dem ein Verhältnis von Alkylalkoxysilan (I, Ia) zu Alkylalkoxysiloxan (II) von 0,5:1 bis maximal 0,98:1 vorliegt, wobei das Alkoxyalkylsilan der allgemeinen Formel

R¹-Si(OR²)₃ (I)

bzw.

CH₃R¹Si(OR²)₂ (Ia) (Ia)

bzw. deren Gemische, in denen
- R¹: einen Alkylrest mit 3 bis 18 C-Atomen, vorzugsweise 8 bis 16 C-Atomen,
- R²: einen Alkylrest mit 1 oder 2 C-Atomen
entspricht, und wobei das Alkylalkoxysiloxan der allgemeinen Formel

R⁴ₓR³_{y}-Si(OR²)_{z}(O)_{(4-x-y-z)/2} (II)

in der
- R²: einen Alkylrest mit 1 oder 2 C-Atomen,
- R³: einen Alkylrest mit 3 bis 18 C-Atomen,
- R⁴: einen Methylrest,
- x + y: einen Wert von 0,75 bis 1,5, wobei
- y: einen Wert größer als 0,1, und
- z: einen Wert von 0,2 bis 2,0 bedeutet,
entspricht,
und eine Viskosität von 2 bis 2000 mPa.s aufweist, und die 0,01 bis 3,5 % eines Emulgators und 30 bis 95 % Wasser enthält, wobei der pH-Wert einen alkalischen Wert aufweist.

Die Alkylalkoxysilane der Formel (I) bzw. (Ia) sind bekannte Produkte. Beispiele für die entsprechenden Alkylreste sind der Butyl-, Hexyl-, Octyl-, Nonyl-, Decyl-, Dodecyl-, Tetradecyl-, Hexadecyl- und Octadecylrest. Bevorzugt werden unverzweigte Reste wie der Butyl-, Octyl- und der Dodecylrest.

Die Alkoxyreste bestehen aus Methoxy- und/oder Ethoxyresten, wobei der Ethoxyrest aus ökologischen Gründen bevorzugt wird.

Die Alkoxyalkylsiloxane der Formel (II) sind prinzipiell (z.B. aus EP-A-157 323 bzw. DE-A-34 12 941) bekannt. Beispiele für die Alkylreste sind der Methyl-, Propyl-, Butyl-, Hexyl-, Dodecyl-, Tetradecyl-, Hexadecyl- und der Octadecylrest. Beispiele für die Alkoxyreste sind Methoxy- und/oder Ethoxyreste, wobei aus reaktiven Gründen erstere bevorzugt werden. Unter dem Begriff Alkylalkoxysiloxan kann auch prinzipiell ein Gemisch verstanden werden, insofern die Globalzusammensetzung der obigen Formel entspricht.

Bevorzugte Reste R³ sind Alkylreste mit 8 bis 16 C-Atomen, besonders bevorzugt ist ein C₁₂-Alkylrest.

Die zu verwendenden Emulgatoren sind handelsüblich. Beispiele hierfür sind Ethylenoxid-Addukte an Fettalkohole oder Alkylphenole, Polyethylenoxid-Sorbitanlaurate und -Triglyceride, wobei der HLB-Wert vorzugsweise zwischen 10 und 16 liegt.

Der pH-Wert kann über Salze und Puffersalze, wie Carbonate und Borate, Acetate oder aber über Amine eingestellt werden. Bevorzugt werden Amonoalkohole. Der bevorzugte pH-Wert liegt um 7,5, insbesondere zwischen 7,3 und 7,8.

Die hochkonzentrierte Emulsion zeigt eine über mehrere Monate hinausgehende Stabilität und wird vorzugsweise auf eine Arbeitskonzentration mit ca. 5% bis 8% Wirkstoff verdünnt. Die verdünnte Form (Arbeitskonzentration) bleibt über mehrere Wochen stabil.

Die Erfindung wird anhand der nachfolgenden Beispiele näher erläutert:

### 1. Herstellung der Emulsionen

**1.1 Emulsion A**
   61,81 Gew.-% eines Gemisches von 0,97 Gew.-Teilen Octyltriethoxysilan und 1 Gew.-Teil eines Harzes der mittleren Zusammensetzung

   (CH₃)_{0.8}(C₁₂H₂₅)_{0.2}Si(O)₁(OCH₃)₁

   werden mit 1,00 Gew.-% eines Gemisches von zwei Addukten von Ethylenoxid an Alkanole mit einem HLB-Wert von 10, in Gegenwart von 0,1 Gew.-% Ethanolamin und 37,09 Gew.-% Wasser bei 200 bar im Strahldispergator mit 2 hintereinandergeschalteten Düsen (100 bar je Düse) in einem Durchgang dispergiert. Die mittlere Teilchengröße beträgt 0,91 µm und die Teilchengrößenverteilung U90 = 1,095.
**1.2 Emulsion B1**
   Die obige Wirkstoffmischung wurde mit 1,00 Gew.-% eines Gemisches aus einem Ethylenoxid-Addukt eines Fettalkohols und einem Polyethylenoxid-Sorbitanlaurat mit einem HLB-Wert von 15, wie oben beschrieben, emulgiert. Die mittlere Teilchengröße beträgt 0,89 µm, die Teilchengrößenverteilung U90=1.090.
**Emulsion B2**
   Die Emulsion B1 wurde erneut durch den Strahldispergator geschickt. Die mittlere Teilchengröße beträgt 0,834 µm, die Verteilung U90 = 1,013.
   Fig. 1 zeigt die differentielle und integrale Teilchengrößenverteilung.
**1.3 Emulsion C**
   61,81 Gew.-% eines Gemisches aus 0,97 Gew.-Teilen Octyltriethoxysilan und 1 Gew.-Teil eines Hydrolysats bestehend aus 20 Mol-% Isobutyl- und 80 Mol-% Methylsiloxy-Gruppen, enthaltend ca. 20 Gew.-% Methoxyreste, wurden wie in Beispiel B2 emulgiert. Die mittlere Teilchengröße beträgt 0,842 µm, die Verteilung U90 = 1,021.
**1.4 Emulsion D**
   Beispiel 1.3 wurde wiederholt mit einer Harzkomponente, die statt Methoxyausschließlich Ethoxygruppen enthält. Die mittlere Teilchengröße beträgt 0,87 µm, die Verteilung U90 = 1,018.
**1.5 Emulsion E1 (Vergleich)**
   Beispiel 1.2 wurde wiederholt. Es wurde jedoch in einem Hochdruckhomogenisator bei 100 bar in 2 aufeinanderfolgenden Durchgängen emulgiert. Die mittlere Teilchengröße beträgt 1,222 µm, die Verteilung U90 = 2,114.
**Emulsion E2**
   Die Emulsion E1 wurde weiteren 6 Durchgängen im Hochdruckhomogenisator unterzogen. Die mittlere Teilchengröße beträgt 0,9386 µm, die Verteilung U90 = 1,229.
**1.6 Emulsion F**
   Beispiel 1.2 wurde wiederholt, wobei 50 % des Octyltriethoxysilans durch Methyl-dodecyl-dimethoxysilan ersetzt wurden. Die mittlere Teilchengröße beträgt 0,854 µm, die Verteilung U90 = 1,031.
**1.7 Emulsion G (nicht bevorzugt)**
   Beispiel 1.2 wurde wiederholt. Es wurde jedoch als Harzkomponente ein Methylethoxypolysiloxanharz der Formel

   CH₃(C₂H₅O)_{0.2}SiO_{1.4}

   eingesetzt.
   Die mittlere Teilchengröße beträgt 0,87 µm, die Verteilung U90 = 1,029.
**1.8 Emulsion H (Vergleich)**
   Es wurde eine Silan-Emulsion gemäß Beispiel 1 der EP-A-340 816 hergestellt.
**1.9 Emulsion J (Vergleich)**
   Es wurde eine Lösung eines Hydrolysates aus 20 Mol-% Isobutyl- und 80 Mol-% Methylsiloxygruppen, das noch ca. 20 Gew.-% Methoxyreste enthält, in Kristallöl 30, einem aliphatische und aromatische Bestandteile enthaltenden Lösungsmittel der Shell AG, hergestellt.

### 2. Anwendungsbeispiele

**2.1** Die gemäß Beispiel 1.2 hergestellte Emulsion B2 wurde zur Imprägnierung von Beton geprüft. Benutzt werden Betonblöcke mit den Maßen 10 x 10 x 5 cm. Die mit Zement, Sand und Grobkorn hergestellten Proben hatten einen Wasser/Zementfaktor von 0,45 und entsprechen den Qualitätsanforderungen von B35. Die Blöcke wurden von 5 Seiten mit einer thixotropen Epoxi-Beschichtung versiegelt. Die verbliebene, abgeriebene Seite wurde leicht mit einer stark verdünnten Salzsäure behandelt und somit von der Schicht anhaftender Zementschlemme befreit.
   Vor der Imprägnierung wurden die Betonblöcke so gelagert, daß die Haushaltsfeuchte 70 % bzw. 45 % der Sättigung entsprach. Die Applikation der Imprägniermittel nach unterschiedlicher Verdünung wurde mit dem Pinsel vorgenommen und durch Kontrolle der aufgenommenen Menge auf 0,3 l/m² Betonoberfläche begrenzt.
   Die Wasseraufnahme des imprägnierten Betons, bei senkrechter Lagerung in Wasser mit 10 cm Eintauchtiefe, sowie die Eindringtiefe nach Brechen der Probekörper, wurden nach einer angemessenen Trockenzeit im Labor bei Raumtemperatur von ca. 23°C bestimmt. Die Ergebnisse sind in Tabellen 1 und 2 dargestellt.
**2.2** Die hergestellten Emulsionen wurden in zwei Anwendungskonzentrationen (I = 12,5 %, II = 9,1 %) zur Imprägnierung verschiedener Baustoffe verwendet.
   Als Baustofe wurden Abschnitte von Ziegelsteinen und Kalksandsteinen mit den Abmessungven 6 x 5 x 1,5 cm verwendet.
   Weiterhin wurden runde Scheiben von Kalkzementputz und eines hochverdichteten Zementmörtels mit 6 cm Durchmesser und einer Dicke von 1,2 cm eingesetzt. Die Imprägnierung erfolgte durch einmaliges Eintauchen der Baustoffproben in die Imprägnieremulsion in 30 Sekunden.
   Nach 7 Tagen Lagerung auf Rosten bei Raumtemperatur von ca. 23°C erfolgte die Beurteilung der Wirkung.
   Folgende Kriterien wurden zur Beurteilung herangezogen:
   a) Eindringtiefe
   b) Oberflächenhydrophobie
   c) Kapillare Wasseraufnahme bei 3 mm Eintauchtiefe

   Die Oberflächenhydrophobie wurde nach folgenden Kriterien beurteilt:
   - s =: saugend
   - ss =: schwach saugend
   - stb =: stark benetzend
   - b =: benetzend
   - h-b =: hydrophob benetzend
   - h =: hydrophob.

   Die Ergebnisse sind in den Tabellen 3 bis 6 dargestellt.

**Tabelle 1**

| **Betonproben mit 70 % Sättigung an Feuchte** | | | | |
|---|---|---|---|---|
| Emulsion | % Wirkstoff | Eindringtiefe [mm] | Wasseraufnahme in Gew.-% | |
| | | | 1 Tag | 5 Tag |
| B 2 | 4,2 | 2,5 | 0,12 | 0,23 |
| B 2 | 6,6 | 4,2 | 0,06 | 0,12 |
| B 2 | 9,0 | 4,3 | 0,05 | 0,14 |
| B 2 | 11,4 | 4,3 | 0,05 | 0,11 |
| Nullprobe | - | - | 1,75 | 2,15 |
| H | 20,0 | 4,0 | 0,17 | 0,44 |
| J | 15,0 | 3,3 | 0,07 | 0,12 |
| J | 7,5 | 4,0 | 0,07 | 0,13 |

**Tabelle 2**

| **Betonproben mit 45 % Sättigung an Feuchte** | | | | |
|---|---|---|---|---|
| Emulsion | % Wirkstoff | Eindringtiefe [mm] | Wasseraufnahme in Gew.-% | |
| | | | 1 Tag | 5 Tag |
| B 2 | 4,2 | 1,3 | 0,14 | 0,23 |
| B 2 | 6,6 | 2,0 | 0,11 | 0,16 |
| B 2 | 9,0 | 3,8 | 0,11 | 0,16 |
| B 2 | 11,4 | 3,3 | 0,10 | 0,14 |
| Nullprobe | - | - | 1,68 | 2,34 |
| H | 20,0 | 3,3 | 0,18 | 0,28 |
| J | 15,0 | 3,9 | 0,07 | 0,15 |
| J | 7,5 | 3,9 | 0,09 | 0,15 |

**Tabelle 3**

| **Ziegel** | | | | | |
|---|---|---|---|---|---|
| | | | % kapillare Wasseraufnahme | | |
| Emulsion | Eindringtiefe [mm] | Oberflächenhydrophobie | 2 h | 6 h | 24 h |
| A I | 5 - 7 | st b | 0,6 | 0,7 | 0,8 |
| B2 I | 6 - 7 | h - b | 0,4 | 0,5 | 0,7 |
| C I | 5 - 7 | h - b | 0,4 | 0,4 | 0,5 |
| D I | 7 -10 | ss | 0,6 | 0,6 | 0,7 |
| E2 I | 5 - 7 | st b | 0,5 | 0,7 | 0,7 |
| F I | 5 - 6 | st b | 0,6 | 0,7 | 0,7 |
| G I | >5 | ss | 1,1 | 1,5 | 10,3 |
| A II | 6 - 7 | st b | 0,5 | 0,5 | 0,6 |
| B2 II | 6 - 7 | h - b | 0,6 | 0,7 | 0,8 |
| C II | 4 - 5 | h - b | 0,5 | 0,5 | 0,7 |
| D II | 5 - 6 | ss | 0,6 | 0,6 | 0,8 |
| E2 II | 5 - 7 | st b | 0,5 | 0,6 | 0,7 |
| F II | 3 - 5 | st b | 0,5 | 0,5 | 0,7 |
| Nullprobe | U | s | 9,8 | 10,0 | 10,4 |

**Tabelle 4**

| **Kalksandstein** | | | | | |
|---|---|---|---|---|---|
| | | | % kapillare Wasserauffnahme | | |
| Emulsion | Eindringtiefe [mm] | Oberflächenhydrophobie | 2 h | 6 h | 24 h |
| A I | 1 - 2 | b | 0,3 | 0,4 | 0,7 |
| B2 I | 2 | b | 0,3 | 0,4 | 0,7 |
| C I | 2 | b | 0,3 | 0,4 | 0,7 |
| D I | 2 | st b | 0,3 | 0,5 | 0,8 |
| E2 I | 1 - 2 | b | 0,3 | 0,4 | 0,6 |
| F I | 2 | b | 0,3 | 0,4 | 0,8 |
| G I | 1 | st b | 0,4 | 0,7 | 1,1 |
| A II | 1 | b | 0,2 | 0,4 | 0,6 |
| B2 II | 1 - 2 | b | 0,2 | 0,4 | 0,6 |
| C II | 1 | b | 0,2 | 0,4 | 0,7 |
| D II | 1 | st b | 0,3 | 0,6 | 1,1 |
| E2 II | 1 - 2 | b | 0,3 | 0,4 | 0,7 |
| F II | 1 | b | 0,6 | 0,7 | 1,0 |
| Nullprobe | 0 | s | 10,1 | 10,2 | 10,3 |

**Tabelle 5**

| **Kalkzementputz** | | | | | |
|---|---|---|---|---|---|
| | | | % kapillare Wasseraufnahme | | |
| Emulsion | Eindringtiefe [mm] | Oberflächenhydrophobie | 2 h | 6 h | 24 h |
| A I | 3 - 4 | st b | 0,6 | 0,7 | 0,8 |
| B2 I | 3 - 4 | st b | 0,5 | 0,7 | 0,7 |
| C I | 2 - 3 | st b | 0,4 | 0,4 | 0,5 |
| D I | 3 - 4 | st b | 0,6 | 0,6 | 0,7 |
| E2 I | 3 - 4 | st b | 0,5 | 0,7 | 0,7 |
| F I | 3 - 4 | st b | 0,6 | 0,7 | 0,7 |
| G I | 2 - 3 | st b | 0,5 | 0,5 | 0,8 |
| A II | 2 - 3 | st b | 0,6 | 0,7 | 0,7 |
| B2 II | 2 - 3 | st b | 0,5 | 0,5 | 0,6 |
| C II | 2 - 3 | st b | 0,5 | 0,5 | 0,7 |
| D II | 2 - 4 | st b | 0,6 | 0,6 | 0,8 |
| E2 II | 2 - 3 | st b | 0,5 | 0,6 | 0,7 |
| F II | 2 - 4 | st b | 0,5 | 0,5 | 0,7 |
| Nullprobe | 0 | s | 10,5 | 10,8 | 10,8 |

**Tabelle 6**

| **Zementmörtel** | | | | | |
|---|---|---|---|---|---|
| | | | % kapillare Wasseraufnahme | | |
| Emulsion | Eindringtiefe [mm] | Oberflächenhydrophobie | 2 h | 6 h | 24 h |
| A I | 1 | st b* | 0,3 | 0,5 | 0,7 |
| B2 I | 1 | b | 0,3 | 0,4 | 0,5 |
| C I | 1 | h - b | 0,2 | 0,3 | 0,5 |
| D I | 0,5 | st b | 0,4 | 0,6 | 0,8 |
| E2 I | 1 | st b | 0,3 | 0,4 | 0,6 |
| F I | 1 | st b | 0,3 | 0,4 | 0,7 |
| G I | 0,5 | st b | 0,5 | 0,6 | 1,1 |
| A II | 0,5 - 1 | st b | 0,4 | 0,5 | 0,8 |
| B2 II | 0,5 - 1 | b | 0,5 | 0,6 | 0,8 |
| C II | 0,5 | h - b | 0,2 | 0,4 | 0,5 |
| D II | 0,5 | st b | 0,5 | 0,8 | 1,1 |
| E2 II | 0,5 | st b | 0,3 | 0,5 | 0,7 |
| F II | 0,5 | st b | 0,3 | 0,4 | 0,8 |
| Nullprobe | 0 | s | 3,8 | 4,2 | 4,2 |

## Patentansprüche

1. Hydrophobierungsmittel für mineralische Baustoffe auf Basis wäßriger Emulsionen von reaktive Gruppen enthaltenden Organosilanen und/oder Organosiloxanharzen, dadurch gekennzeichnet, daß die disperse Phase eine mittlere Teilchengröße von 0,3 bis 1,1 µm und eine Breite der Teilchengrößenverteilung von unter 1,3 aufweist.

2. Hydrophobierungsmittel nach Anspruch 1, dadurch gekennzeichnet, daß die Emulsion 5 bis 70 Gew.-% eines Gemisches enthält, in dem ein Verhältnis von Alkylalkoxysilan (I, Ia) zu Alkylalkoxysiloxan (II) von 0,5:1 bis maximal 0,98:1 vorliegt, wobei das Alkoxyalkylsilan der allgemeinen Formel
R¹-Si(OR²)₃ (I)
bzw.
CH₃R¹Si(OR²)₂ (Ia)
bzw. deren Gemische, in denen
R¹ einen Alkylrest mit 3 bis 16 C-Atomen,
R² einen Alkylrest mit 1 oder 2 C-Atomen
entspricht, und wobei das Alkylalkoxysiloxan der allgemeinen Formel
R⁴ₓR³_{y}-Si(OR²)_{z}(O)_{(4-x-y-z)/2} (II)
in der
R² einen Alkylrest mit 1 oder 2 C-Atomen,
R³ einen Alkylrest mit 3 bis 18 C-Atomen,
R⁴ einen Methylrest,
x + y einen Wert von 0,75 bis 1,5, wobei
y einen Wert größer als 0,1, und
z einen Wert von 0,2 bis 2,0 bedeutet,
entspricht,
und eine Viskosität von 2 bis 2000 mPa.s aufweist, und die 0,01 bis 3,5 % eines Emulgators und 30 bis 95 % Wasser enthält, wobei der pH-Wert einen alkalischen Wert aufweist.

3. Hydrophobierungsmittel nach Anspruch 2, dadurch gekennzeichnet, daß die Alkylsiloxankomponente methoxyfunktionell ist.

4. Hydrophobierungsmittel nach Anspruch 2 oder 3, dadurch gekennzeichnet, daß R³ einen Rest mit 4 bis 18, vorzugsweise 8 bis 12 C-Atomen bedeutet.

5. Verfahren zur Herstellung des Hydrophobierungsmittels nach einem der Ansprüche 1 bis 4, dadurch gekennzeichnet, daß eine Voremulsion unter einem Druck von 30 bis 150 bar 2- bis 10-mal durch eine Düse mit geringer Abmessung in mindestens einer Dimension gedrückt wird.

## Claims

1. Waterproofing agent for mineral building materials, based on aqueous emulsions of organosilanes and/or organosiloxane resins containing reactive groups, characterised in that the disperse phase has an average particle size of 0.3 to 1.1 µm and a particle-size distribution range of less than 1.3.

2. Waterproofing agent according to claim 1, characterised in that the emulsion contains 5 to 70 wt.% of a mixture, in which the ratio of alkylalkoxysilane (I, Ia) to alkylalkoxysiloxane (II) is from 0.5:1 up to 0.98:1 at maximum, wherein the alkoxyalkylsilane corresponds to the general formula
R¹-Si(OR²)₃ (I)
or
CH₃R¹Si(OR²)₂ (Ia)
or to mixtures thereof, wherein
R¹ denotes an alkyl group having 3 to 16 C atoms,
R² denotes an alkyl group having 1 or 2 C atoms,
and wherein the alkylalkoxysiloxane corresponds to the general formula
R⁴ₓR³_{y}-Si(OR²)_{z}(O)_{(4-x-y-z)/2} (II)
wherein
R² denotes an alkyl group having 1 or 2 C atoms,
R³ denotes an alkyl group having 3 to 18 C atoms,
R⁴ denotes a methyl group,
x + y has a value from 0.75 to 1.5, with
y being a value greater than 0.1, and
z being a value from 0.2 to 2.0,
and has a viscosity of 2 to 2000 mPa.s, and which contains 0.01 to 3.5% of an emulsifier and 30 to 95% water, the pH value having an alkaline value.

3. Waterproofing agent according to claim 2, characterised in that the alkylsiloxane component is methoxyfunctional.

4. Waterproofing agent according to claim 2 or 3, characterised in that R³ denotes a group having 4 to 18, preferably 8 to 12 C atoms.

5. Process for the preparation of a waterproofing agent according to one of claims 1 to 4, characterised in that a preliminary emulsion is pressed under a pressure of 30 to 150 bar twice to ten times through a nozzle having a small measurement in at least one dimension.

## Revendications

1. Agent imperméabilisant pour des matériaux de construction minéraux à base d'émulsions aqueuses d'organosilanes et/ou de résines d'organosiloxanes contenant des groupes réactifs, caractérisé en ce que la phase dispersée présente une taille moyenne de particules de 0,30 à 1 µm et une largeur de la granulométrie inférieure à 1,3.

2. Agent imperméabilisant selon la revendication 1, caractérisé en ce que l'émulsion contient de 5 à 70% en poids d'un mélange dans lequel se trouve un rapport de l'alkylalcoxysilane (I, Ia) à l'alkylalcoxysiloxane (II) de 0,5 : 1 à 0,98 : 1 au maximum, l'alcoxyalkylsilane correspondant à la formule générale
R¹-Si(OR²)₃ (I)
ou
CH₃R¹Si(OR²)₂ (Ia)
ou à leurs mélanges, dans lesquelles
R¹ représente un reste alkyle avec de 3 à 16 atomes de C,
R² représente un reste alkyle avec 1 ou 2 atomes de C,
et l'alkylalcoxysiloxane correspondant à la formule générale
R⁴ₓR³_{y}-Si(OR²)_{z}(O)_{(4-x-y-z)/2} (II)
dans laquelle
R² représente un reste alkyle avec 1 ou 2 atomes de C,
R³ représente un reste alkyle avec de 3 à 18 atomes de C,
R⁴ représente un reste méthyle,
x + y représente une valeur de 0,75 à 1,5,
y étant une valeur supérieure à 0,1, et
z étant une valeur de 0,2 à 2,0,
et présente une viscosité de 2 à 2 000 mPa.s, et laquelle contient de 0,01 à 3,5% d'un émulsionnant et de 30 à 95% d'eau, la valeur du pH présentant une valeur alcaline

3. Agent imperméabilisant selon la revendication 2, caractérisé en ce que le constituant d'alkylsiloxane est méthoxy fonctionnel.

4. Agent imperméabilisant selon la revendication 2 ou 3, caractérisé en ce que R³ est un reste avec de 4 à 18, de préférence de 8 à 12 atomes de C.

5. Procédé pour la préparation de l'agent imperméabilisant selon l'une quelconque des revendications 1 à 4, caractérisé en ce que l'on comprime une préémulsion sous une pression de 30 à 150 bars de 2 à 10 fois à travers une buse de faible dimension dans au moins une dimension.
